# EUROPÄISCHE PATENTANMELDUNG

(11) **EP 4 082 716 A1**
(43) Veröffentlichungstag der Anmeldung: **02.11.2022**
(21) Anmeldenummer: 22170850.6
(22) Anmeldetag: 29.04.2022
(51) Int. Cl.: B23Q 1/70, B23F 23/12, B23Q 5/04, B24B 41/04

(54) **WERKZEUGMASCHINENSPINDELANORDNUNG UND WERKZEUGMASCHINE**

(30) Priorität: 30.04.2021 DE 102021111150
(71) Anmelder: KAMAX Holding GmbH & Co. KG, 35315 Homberg (Ohm) (DE)
(72) Erfinder: Jänsch, Armin, 35315 Homberg (Ohm) (DE); Ludwig, Christian, 64289 Darmstadt (DE); Gensert, Hilmar, 04849 Bad Düben (DE)
(74) Vertreter: Müller Schupfner & Partner Patent- und Rechtsanwaltspartnerschaft mbB

(57) **Zusammenfassung**

Werkzeugmaschinenspindelanordnung (1) umfassend eine Spindelanordnung (10) und eine Werkzeugaufnahme (30), wobei die Spindelanordnung (10) eine Primärspindel (16) mit einer Primärlagerstelle (12) und eine Sekundärspindel (18) mit einer Sekundärlagerstelle (14) umfasst, wobei die Spindelanordnung (10) durch die Primärlagerstelle (12) und durch die Sekundärlagerstelle (14) drehbar um eine Längsrichtung (L) gelagert ist oder lagerbar ist, wobei die Werkzeugaufnahme (30) in Längsrichtung (L) zwischen der Primärlagerstelle (12) und der Sekundärlagerstelle (14) angeordnet ist, und wobei die Primärspindel (16) und die Sekundärspindel (18) in Längsrichtung (L) verschieblich zueinander sind.

## Beschreibung

Die Erfindung betrifft eine Werkzeugmaschinenspindelanordnung sowie eine Werkzeugmaschine.

Werkzeugmaschinen und die in diesen vorhandenen Spindelanordnungen sind im Stand der Technik bekannt. Die Spindeln der Spindelanordnungen dienen meist dazu, Momente von einem Motor auf ein Werkzeug zu übertragen und die bei der Bearbeitung eines Werkstücks auftretenden Bearbeitungskräfte sicher aufnehmen zu können. Hierzu ist es nötig, um eine hohe Maßgenauigkeit bei der Fertigung zu erreichen, eine besonders steife Spindelanordnung zu verwenden. Gleichzeitig ist es jedoch - gerade bei der Fertigung von geringen Stückzahlen - nötig, schnell einen Wechsel des Werkzeugs zu ermöglichen. Daher werden die im Stand der Technik bekannten Werkzeugmaschinen derart ausgebildet, dass die Werkzeugaufnahme der Spindel an einem axialen Ende der Spindel angeordnet ist. Dies führt jedoch zwangsweise dazu, dass die Spindel für eine ausreichende Fertigungsgenauigkeit sehr massiv ausgeführt werden muss.

Es ist daher Aufgabe der vorliegenden Erfindung, eine Werkzeugmaschinenspindelanordnung bereitzustellen, die sowohl ein schnelles Wechseln eines Werkzeugs als auch eine hohe Maßgenauigkeit ermöglicht und gleichzeitig ein geringes Gewicht aufweist.

Diese Aufgabe wird mit einer Werkzeugmaschinenspindelanordnung gemäß dem Anspruch 1 und mit einer Werkzeugmaschine gemäß dem Anspruch 14 und mit einer Verwendung gemäß dem Anspruch 15 gelöst. Bevorzugte Ausführungsformen, Vorteile und Merkmale ergeben sich aus den Unteransprüchen, der Beschreibung sowie aus den Figuren.

Erfindungsgemäß umfasst eine Werkzeugmaschinenspindelanordnung eine Spindelanordnung und eine Werkzeugaufnahme, wobei die Spindelanordnung insbesondere eine Primärspindel mit einer Primärlagerstelle und eine Sekundärspindel mit einer Sekundärlagerstelle umfassen kann, wobei die Spindelanordnung durch die Primärlagerstelle und durch die Sekundärlagerstelle drehbar um eine Längsrichtung gelagert sein kann oder lagerbar sein kann, wobei die Werkzeugaufnahme insbesondere in Längsrichtung gesehen zwischen der Primärlagerstelle und der Sekundärlagerstelle angeordnet ist, und wobei die Primärspindel und die Sekundärspindel vorteilhafterweise in Längsrichtung verschieblich zueinander sind. Die Werkzeugmaschinenspindelanordnung dient dazu, in einer Werkzeugmaschine anordenbar zu sein oder angeordnet zu sein. In anderen Worten kann die Werkzeugmaschinenspindelanordnung ein Teil einer Werkzeugmaschine, insbesondere einer Werkzeugmaschine zur Minderung von Zusammenhalt, vorteilhafterweise mittels geometrisch unbestimmter Schneide, sein. Die Werkzeugmaschinenspindelanordnung umfasst eine Spindelanordnung und eine Werkzeugaufnahme. Die Spindelanordnung dient dabei dazu, ein Drehmoment von einem Motor, insbesondere von einem Motor der Werkzeugmaschine, auf ein Werkzeug zu übertragen. Dieses Werkzeug ist dabei durch die Werkzeugaufnahme in Relation zur Spindelanordnung und/oder in Relation zur Werkzeugmaschine gehalten. Die Werkzeugaufnahme selbst kann dabei teilweise durch die Spindelanordnung ausgebildet sein. Alternativ bevorzugt kann die Werkzeugaufnahme auch durch mehrere separate Bauteile ausgebildet sein, welche nicht Teil der Spindelanordnung sein müssen. Bevorzugt ist jedoch zumindest ein Teil der Werkzeugaufnahme durch die Primärspindel und/oder die Sekundärspindel ausgebildet, um so eine besonders kompakte Werkzeugmaschinenspindelanordnung zu erreichen. Die Spindelanordnung umfasst vorteilhafterweise eine Primärspindel mit einer Primärlagerstelle und eine Sekundärspindel mit einer Sekundärlagerstelle. Die Primär- und die Sekundärspindel sind dabei über deren Primärlagerstelle bzw. über deren Sekundärlagerstelle gegenüber einer Werkzeugmaschine abgestützt oder abstützbar. In anderen Worten dient die Primärlagerstelle zur Lagerung der Primärspindel und die Sekundärlagerstelle zur Lagerung der Sekundärspindel. Diese Lagerung ist dabei insbesondere derart ausgebildet, dass sowohl die Primärspindel als auch die Sekundärspindel um eine Längsrichtung drehbar gelagert sind. Daher kann die Spindelanordnung sowohl durch die Primärlagerstelle als auch durch die Sekundärlagerstelle drehbar um eine Längsrichtung gelagert sein. Die Längsrichtung ist insbesondere diejenige Richtung, in welcher die Spindelanordnung ihre größte Hauptdimension aufweist, und/oder diejenige Richtung, um welche die Spindelanordnung frei drehbar ist, um ein Drehmoment von der Werkzeugmaschine auf ein Werkzeug zu übertragen. In anderen Worten kann daher die Längsrichtung insbesondere auch diejenige Richtung sein, um welche das Werkzeug rotiert, welches in der Werkzeugaufnahme der Werkzeugmaschinenspindelanordnung angeordnet oder anordenbar ist und/oder die Längsrichtung kann diejenige Richtung sein, in welcher sich die Länge der Primärspindel und/oder der Sekundärspindel bemisst. Die Werkzeugaufnahme der Werkezugmaschinenspindelanordnung ist in Längsrichtung zwischen der Primärlagerstelle und der Sekundärlagerstelle angeordnet. Die Längsrichtung kann auch als Längsachse bezeichnet werden. Unter einem "zwischen" ist dabei insbesondere zu verstehen, dass die Werkzeugaufnahme zumindest teilweise, bevorzugt vollständig, in dem Zwischenraum - in Längsrichtung gesehen - zwischen der Primärlagerstelle und der Sekundärlagerstelle befindlich ist, zumindest in der Bearbeitungsstellung. Durch die Anordnung der Werkzeugaufnahme zwischen der Primärlagerstelle und der Sekundärlagerstelle kann erreicht werden, dass ein besonders hohes Maß an Abstützungsfähigkeit der Spindelanordnung erreicht werden kann, so dass auch hohe Kräfte sicher durch die Werkzeugmaschinenspindelanordnung abgestützt werden können, ohne eine große Verformung zu verursachen. Maßgeblich für die Bestimmung des "zwischen" der Primärlagerstelle und der Sekundärlagerstelle der Werkzeugaufnahme sind dabei insbesondere die am weitesten zueinander entfernten Lagerbereiche der Primärspindel und der Sekundärspindel. Alternativ oder zusätzlich bevorzugt können für das zwischen der Primärlagerstelle und der Sekundärlagerstelle Angeordnet sein auch die zueinander am nächstliegenden Teile der Primärlagerstelle und der Sekundärlagerstelle maßgeblich sein. Die Primärspindel und die Sekundärspindel sind insbesondere derart angeordnet und/oder gelagert, dass diese in Längsrichtung verschieblich zueinander sind. Unter einem in Längsrichtung verschieblich zueinander ist dabei zu verstehen, dass die Primärspindel und die Sekundärspindel in Relation zueinander verschoben werden können. Beispielsweise kann die Spindelanordnung geteilt und zueinander verlagerbar gelagert sein. Daher kann die Primärspindel und die Sekundärspindel in einer ersten Stellung näher zueinander beabstandet sein als in einer zweiten Stellung. Diese erste Stellung wird teilweise auch als Bearbeitungsstellung oder als Arbeitsstellung bezeichnet und die zweite Stellung als Wechselstellung, denn in dieser Stellung kann insbesondere das Werkzeug für einen Wechsel desselbigen entnommen werden. Die Werkzeugmaschinenspindelanordnung ist insbesondere derart ausgebildet, dass in der Bearbeitungsstellung ein Drehmoment zwischen der Primär- und der Sekundärspindel übertragen werden kann, insbesondere ein Drehmoment um die Längsrichtung und/oder senkrecht um die Längsrichtung. In der Bearbeitungsstellung kann daher insbesondere ein Werkzeug durch die Werkzeugmaschinenspindelanordnung angetrieben werden. In der Wechselstellung hingegen kann insbesondere kein Drehmoment, z.B. um die Längsrichtung, zwischen der Primär- und der Sekundärspindel übertragen werden. In der Wechselstellung kann jedoch insbesondere ein Werkzeug leicht - durch die Beabstandung der Primär- und der Sekundärspindel - in die Werkzeugaufnahme eingeführt werden oder aus dieser entnommen werden. In anderen Worten kann daher in der Wechselstellung in einfacher Weise ein Wechsel eines Werkzeugs, z.B. einer Schleifscheibe, stattfinden. Die Bearbeitungsstellung ist daher insbesondere diejenige Stellung der Primär- und der Sekundärspindel zueinander, in welcher diese Bauteile - bei einem bestimmungsgemäßen Einbau der Werkzeugmaschinenspindelanordnung - den kleinsten möglichen Abstand in Längsrichtung zueinander aufweisen. Die Wechselstellung hingegen ist insbesondere diejenige Stellung der Primär- und der Sekundärspindel zueinander, in welcher die Primär- und die Sekundärspindel - bei einem bestimmungsgemäßen Einbau der Werkzeugmaschinenspindelanordnung - den größten möglichen Abstand in Längsrichtung zueinander aufweisen. Die Differenz der Beabstandung in Längsrichtung zwischen der Bearbeitungsstellung und der Wechselstellung zwischen der Primär- und der Sekundärspindel, welche auch als Verschiebeweg bezeichnet werden kann, beträgt vorteilhafterweise mindestens 70 mm, bevorzugt zumindest 90 mm, besonders bevorzugt zumindest 100 mm und besonders stark bevorzugt zumindest 120 mm. Die Spindelanordnung ist insbesondere derart ausgelegt und/oder angeordnet und/oder gelagert, dass die Primärspindel und die Sekundärspindel fluchtend zueinander sind, zumindest in derjenigen Stellung, in welcher die Primärspindel und die Sekundärspindel ihre in Längsrichtung gesehen nächstkommende Stellung zueinander eingenommen haben (Bearbeitungsstellung) und/oder in der Wechselstellung. Durch diese Verschieblichkeit der Sekundärspindel in Relation zur Primärspindel in Längsrichtung kann erreicht werden, dass in besonders einfacher Weise eine Montage und Demontage eines Werkzeugs in der Werkzeugaufnahme der Werkzeugmaschinenspindelanordnung erreicht werden kann. Zeitgleich kann jedoch durch die Anordnung der Lagerstellen in Relation zur Werkzeugaufnahme eine sichere Abstützung der Spindelanordnung und der Werkzeugmaschinenspindelanordnung erreicht werden, so dass hierdurch ein hohes Maß an Maßgenauigkeit erreicht werden kann.

Besonders bevorzugt liegt das Verhältnis aus dem maximalen Durchmesser der Spindelanordnung zu dem Verschiebeweg in einem Bereich von 0,2 bis 1,2, bevorzugt in einem Bereich von 0,4 bis 1,1 und besonderes bevorzugt in einem Bereich von 0,45 und 0,9. Bei einem Verhältnis von 0,2 bis 1,2 kann eine besonders einfache Demontage des Werkzeugs erreicht werden. Bei einem Bereich von 0,4 bis 1,1 resultiert ein besonders guter Kompromiss zwischen der Maßhaltigkeit der Spindelanordnung und einer Wechselfähigkeit des Werkzeugs, wobei gleichzeitig die Fertigungskosten aufgrund des Materialaufwands für die Werkzeugmaschinenspindelanordnung gering gehalten werden kann. Der maximale Durchmesser der Spindelanordnung ist insbesondere der maximale Durchmesser der Primär- und/oder der Sekundärspindel in einer Ebene senkrecht zur Längsrichtung. Der maximale Durchmesser ist dabei insbesondere der Durchmesser desjenigen gedachten kleinstmöglichen Kreises, welcher gerade die äußere Kontur des maßgeblichen Bauteils umschließen kann.

Zweckmäßigerweise sind die Primärspindel und die Sekundärspindel derart ausgelegt, dass formschlüssig und/oder reibschlüssig ein Drehmoment um die Längsrichtung zwischen der Primärspindel und der Sekundärspindel übertragbar ist, insbesondere durch die Werkzeugaufnahme und/oder direkt zwischen der Primär- und der Sekundärspindel. In anderen Worten können die Primärspindel und die Sekundärspindel derart ausgelegt sein, dass form- und/oder reibschlüssig ein Drehmoment um die Längsrichtung, zumindest in der Bearbeitungsstellung, zwischen der Primärspindel und der Sekundärspindel übertragen werden kann. Beispielsweise kann dies durch eine Kupplung oder eine Vielzahl von Kupplungen erreicht werden, welche zwischen der Primärspindel und der Sekundärspindel angeordnet ist/sind. Zweckmäßigerweise ist die Werkzeugmaschinenspindelanordnung derart ausgebildet, dass in der Wechselstellung zwischen der Primärspindel und der Sekundärspindel kein Drehmoment um die Längsrichtung zwischen der Primärspindel und der Sekundärspindel übertragen werden kann. Daher kann die Werkzeugmaschinenspindelanordnung insbesondere derart ausgebildet sein, dass in der Bearbeitungsstellung ein Drehmoment von der Primärspindel auf die Sekundärspindel übertragbar ist, jedoch in der Wechselstellung die Primärspindel und die Sekundärspindel unabhängig voneinander um die Längsrichtung rotieren können oder stillstehen können. Durch diese Drehmomentübertragbarkeit zwischen der Primärspindel und der Sekundärspindel kann erreicht werden, dass sowohl die Primär- als auch die Sekundärspindel zur Antriebsdrehmomentübertragung auf die Werkzeugaufnahme bzw. auf das in der Werkzeugaufnahme aufgenommene Werkzeug genutzt werden können, so dass eine besonders kompakte Werkzeugmaschinenspindelanordnung resultiert. Alternativ oder zusätzlich bevorzugt kann die Primär- und/oder die Sekundärspindel durch einen Motor antreibbar sein. In anderen Worten kann jeweils ein Motor vorgesehen sein, welcher die Primär-, und ein Motor, welcher die Sekundärspindel antreibt. Hierdurch kann ein geringer Bauraum und zeitgleich eine große Antriebsleistung erreicht werden. Der Vorteil einer reibschlüssigen Drehmomentübertragung liegt dabei darin, dass das maximal übertragbare Drehmoment variabel eingestellt werden kann und darüber hinaus eine derartige Drehmomentübertragung auch kostengünstig und schwingungsdämpfend ist. Der Vorteil einer formschlüssigen Drehmomentübertragung liegt zum einen in der besonders hohen Sicherheit der Drehmomentübertragung als auch in der Synchronisation der Drehbewegung der Primärspindel in Relation zur Sekundärspindel. Besonders bevorzugt ist es jedoch, wenn die Drehmomentübertragung sowohl formschlüssig als auch reibschlüssig stattfindet, denn durch eine derartige Drehmomentübertragung kann ein besonders hohes Maß an Drehmoment sicher übertragen werden. Zweckmäßigerweise ist dabei bei einer gleichzeitigen form- als auch kraftschlüssigen Drehmomentübertragung zumindest 20% der Drehmomentübertragung auf den Reibschluss bzw. auf den kraftschlüssigen Anteil der Drehmomentübertragung zurückzuführen.

In einer vorteilhaften Ausführungsform ist die Primärspindel und die Sekundärspindel derart ausgelegt, dass formschlüssig und/oder reibschlüssig ein Drehmoment senkrecht um die Längsrichtung und/oder Kräfte in Längsrichtung und/oder senkrecht zur Längsrichtung zwischen der Primärspindel und der Sekundärspindel, insbesondere über die Werkzeugaufnahme, übertragbar sind. In anderen Worten können die Primärspindel und die Sekundärspindel derart ausgelegt und/oder miteinander verbindbar sein, so dass zwischen der Primärspindel und der Sekundärspindel, insbesondere in der Bearbeitungsstellung, formschlüssig und/oder reibschlüssig ein Drehmoment senkrecht zur Längsrichtung zwischen der Primärspindel und der Sekundärspindel übertragbar ist. Hierdurch ist es insbesondere möglich, Biegemomente sicher durch die Primärspindel und die Sekundärspindel, welche durch die Kräfte auf das Werkzeug bzw. die Werkzeugaufnahme verursacht sein können, aufnehmen zu können. Alternativ oder zusätzlich bevorzugt können die Primärspindel und die Sekundärspindel auch derart ausgelegt und/oder miteinander verbindbar sein, so dass formschlüssig und/oder reibschlüssig eine Kraft in Längsrichtung zwischen der Primärspindel und der Sekundärspindel, zumindest in der Bearbeitungsstellung, übertragbar ist. Alternativ oder zusätzlich bevorzugt können auch Kräfte senkrecht zur Längsrichtung zwischen der Primärspindel und der Sekundärspindel - zumindest in der Bearbeitungsstellung - übertragbar sein, so dass die Primärspindel und die Sekundärspindel auch Querkräfte während der Bearbeitung bzw. in der Bearbeitungsstellung von dem Werkzeug sicher aufnehmen können und über die Primär- und über die Sekundärlagerstellen sicher in ein Maschinengestell bzw. ein Werkzeugmaschinengestell ableiten können. Hierdurch kann auch die Abstützfähigkeit der Werkzeugmaschinenspindelanordnung weiter gesteigert werden. Die Verwendung einer kraftschlüssigen Übertragung hat dabei den Vorteil, dass durch die in dem Kontaktspalt vorhandene Reibung eine Schwingungsdämpfung verursacht wird. Der Vorteil der formschlüssigen Kraft- bzw. Drehmomentübertragung liegt insbesondere in der hohen Sicherheit der Kraftübertragung und der genau definierten Positionierung der Spindelanordnungsbauteile zu einander. Besonders bevorzugt ist es dabei, wenn die Werkzeugmaschinenspindelanordnung derart ausgebildet ist, dass in der Wechselstellung keine Kraft- und/oder Momentenübertragung zwischen der Primär- und der Sekundärspindel möglich ist.

In einer vorteilhaften Ausführungsform weist die Werkzeugmaschinenspindelanordnung eine HSK-Kupplung auf, wobei die Primärspindel und die Sekundärspindel über die HSK-Kupplung miteinander verkuppelt sind oder verkuppelbar sind. Alternativ oder zusätzlich bevorzugt können die Primärspindel und/oder die Sekundärspindel über eine HSK mit der Werkzeugaufnahme verbunden oder verbindbar sein. Die HSK-Kupplung kann dabei beispielsweise derart angeordnet sein, dass diese unmittelbar die Primärspindel mit der Sekundärspindel verbindet und so Kräfte in Längsrichtung und/oder senkrecht zur Längsrichtung sowie Drehmomente um und/oder senkrecht um die Längsrichtung form- und/oder reibschlüssig zwischen der Primärspindel und der Sekundärspindel übertragen kann und/oder zwischen der Primär- und/oder der Sekundärspindel und der Werkzeugaufnahme. Der Vorteil einer HSK-Kupplung ist dabei unter anderem, dass diese schnell reversibel gelöst werden kann und gleichzeitig jedoch ein hohes Maß an Drehmomentübertragung, insbesondere um bzw. in Längsrichtung, sicherstellt. Um eine besonders einfach zu handhabende Werkzeugmaschinenspindelanordnung zu erreichen, sollten die weiblichen Bestandteile der HSK-Kupplung möglichst an der Primär- und/oder der Sekundärspindel angeordnet oder ausgebildet sein.

Vorteilhafterweise umfasst die Werkzeugmaschinenspindelanordnung einen Motor, insbesondere einen Elektromotor, wobei der Motor ein Drehmoment um die Längsrichtung auf die Primärspindel und/oder auf die Sekundärspindel ausübt oder ausüben kann. Durch das Vorsehen eines Motors in der Werkzeugmaschinenspindelanordnung kann eine besonders kompakte Werkzeugmaschinenspindelanordnung erreicht werden. Vorteilhafterweise ist in der Drehmomentübertragungskausalkette zwischen dem Motor und der Primärspindel und/oder der Sekundärspindel kein Getriebe vorgesehen, welches ein Übersetzungsverhältnis aufweist, welches von 1 abweist. In anderen Worten kann der Motor direkt und/oder ohne ein Übersetzungsverhältnis ein Drehmoment auf die Primärspindel und/oder auf die Sekundärspindel ausüben. Besonders zweckmäßig ist es jedoch, wenn die Primärspindel und/oder die Sekundärspindel direkt einen Teil des Motors ausbilden. In anderen Worten kann die Motorwelle selbst die Primärspindel und/oder die Sekundärspindel ausbilden bzw. sein. Hierdurch kann eine ganz besonders kompakte Anordnung erreicht werden. Bei einem direkten Antreiben der Primär- und der Sekundärspindel jeweils durch einen eigenen Motor, insbesondere in dem die jeweilige Spindel eine Motorwelle des jeweiligen Motors ausbildet, kann eine besonders kompakte Anordnung erreicht werden, welche jedoch dennoch ein hohes Drehmoment bereitstellen kann.

Zweckmäßigerweise ist der oder ein Motor, bevorzugt alle Motoren, ein Elektromotor, um ein hohes Maß an Einsatzfähigkeit der Werkzeugmaschinenspindelanordnung zu erreichen. Alternativ bevorzugt kann der oder ein Motor, bevorzugt alle Motoren, auch ein pneumatischer oder hydraulischer Motor sein, wobei hierdurch insbesondere erreicht werden kann, dass in Regionen mit anfälliger Stromversorgung die Werkzeugmaschinenspindelanordnung dennoch sicher eingesetzt werden kann. Die dabei maßgeblichen Motoren sind insbesondere diejenigen, welche eine Rotation des Werkzeugs bzw. der Werkzeugaufnahme bedingen können.

In einer vorteilhaften Ausführungsform ist der Motor in Längsrichtung in Relation zur Primärspindel und/oder zur Sekundärspindel in Längsrichtung verschieblich, insbesondere durch ein Stellmittel. In anderen Worten kann der Motor in Relation zur Primärspindel und/oder in Relation zur Sekundärspindel axial verschieblich sein. Hierdurch kann ein besonders hoher Modularisierungsgrat erreicht werden, sodass u.a. die Werkzeugmaschinenspindelanordnung leicht in bereits vorhandenen Maschinen eingesetzt werden kann. Beispielsweise kann der Motor in Relation zur Primärspindel nicht axial verschieblich sein, jedoch in Relation zur Sekundärspindel axial verschieblich sein. Hierdurch kann eine besonders sichere Drehmomentübertragung zwischen Motor und Primärspindel erreicht werden. Zweckmäßigerweise kann der Motor insbesondere in Relation zur Werkzeugaufnahme und/oder in Relation zum Maschinengestell der Werkzeugmaschine verschieblich sein. Hierdurch kann erreicht werden, dass die Werkzeugaufnahme und/oder der nicht verschiebliche Teil der Spindelanordnung sicher gelagert und abgestützt werden kann.

Die Verstellung bzw. die Verlagerung des Motors in Längsrichtung kann insbesondere durch ein Stellmittel erreicht werden, welches beispielsweise ein Zylinder, insbesondere ein doppeltwirkender Zylinder, oder ein Linearmotor sein kann. Hierdurch ist insbesondere eine automatische Verstellung bzw. Verschiebung des Motors in Längsrichtung in Relation zur Primärspindel und/oder in Relation zur Sekundärspindel erreichbar, so dass die Bedienungsfreundlichkeit der Werkzeugmaschinenspindelanordnung gesteigert werden kann. Alternativ oder zusätzlich bevorzugt kann das Stellmittel auch eine Spindel, insbesondere mit einem Gewinde, sein und/oder eine derartige umfassen. Eine derartige Spindel erlaubt ein hohes Maß an Kraftübertragung und kann in effektiver Weise eine Lagesicherung durch eine selbstsichernde Ausgestaltung erreichen.

Vorteilhafterweise ist an und/oder in der Werkzeugaufnahme ein Werkzeug, insbesondere ein Werkzeug mit geometrisch unbestimmter Schneide, angeordnet. Das Werkzeug dient dazu, ein Werkstück zu bearbeiten. Beispielsweise kann dieses Werkzeug dabei ein Fräser oder eine Schleifscheibe sein. Vorteilhafterweise ist das Werkzeug derart ausgebildet, dass dieses in einem montierten Zustand die Primärspindel und/oder die Sekundärspindel umgibt. Beispielsweise kann das Werkzeug in seinem montierten Zustand ringförmig ausgebildet sein und wobei dieser Ring sich um die Spindelanordnung, insbesondere die Primärspindel oder die Sekundärspindel, erstrecken kann. Durch diese ringförmige Ausgestaltung des Werkzeugs kann eine besonders mechanisch belastbare Konstruktion erreicht werden. Vorteilhafterweise ist die Werkzeugaufnahme und die ganze Werkzeugmaschinenspindelanordnung derart ausgelegt und dimensioniert, dass diese Werkzeuge, insbesondere Schleifscheiben, von 20 bis 300 kg, bevorzugt von 30 bis 120 kg und besonders bevorzugt von 40 bis 60 kg, aufnehmen und abstützen kann. Durch die Möglichkeit der Werkzeugmaschinenspindelanordnung Werkzeuge von 20 bis 300 kg sicher aufnehmen zu können, können auch großförmige Bauteile sicher durch die Werkzeugmaschinenspindelanordnung bearbeitet werden. Sollte die Werkzeugmaschinenspindelanordnung derart ausgelegt sein, dass diese Werkzeuge im Bereich von 30 bis 120 kg sicher abstützen kann, so resultiert eine Werkzeugmaschinenspindelanordnung, welche auch zur Bearbeitung von äußeren Bauteilen sicher verwendet werden kann. Unter der Möglichkeit der Werkzeugmaschinenspindelanordnung - derartig gewichtige Werkzeuge sicher aufnehmen zu können - ist dabei zu verstehen, dass die Werkzeugmaschinenspindelanordnung derartige Werkzeuge aufnehmen kann und mit diesen Werkzeugen sicher eine Bearbeitung eines Werkstücks bewerkstelligen kann. In anderen Worten ist es daher z.B. nicht ausreichend, wenn die Werkzeugmaschinenspindelanordnung lediglich dazu in der Lage ist, dass an dieser z.B. 300 kg angehängt werden können, ohne dass mit diesen 300 kg sicher eine Bearbeitung eines Werkstücks erfolgen kann.

Vorteilhafterweise ist die Werkzeugaufnahme eine kraftschlüssige Werkzeugaufnahme. In anderen Worten kann die Werkzeugaufnahme derart ausgebildet sein, dass zumindest die axiale Fixierung (in Längsrichtung) des Werkzeugs - zumindest in positive und/oder negative Längsrichtung - in der Werkzeugaufnahme durch Reibkräfte bewerkstelligt ist. Dies ist beispielsweise bei (axialen) Schraubenverbindungen der Fall. Alternativ oder zusätzlich bevorzugt weist daher die Werkzeugaufnahme zumindest eine Schraube, bevorzugt eine Vielzahl von Schrauben, auf, welche in einem montierten Zustand das Werkzeug axial in der Werkzeugaufnahme in Relation zur Primärspindel und/oder zur Sekundärspindel halten. Durch die Verwendung von Schrauben kann eine besonders schnelle und einfache reversible Montage und Demontage des Werkzeugs erreicht werden.

Zweckmäßigerweise umfasst die Werkzeugmaschinenspindelanordnung ein Primärlager und ein Sekundärlager, wobei vorteilhafterweise das Primärlager und/oder zweckmäßigerweise das Sekundärlager ein Wälzlager, insbesondere ein Kugellager, ist und/oder umfasst, wobei das Primärlager an der Primärlagerstelle angeordnet ist, und/oder wobei das Sekundärlager an der Sekundärlagerstelle angeordnet ist, wobei das Sekundärlager zum Primärlager vorteilhafterweise, insbesondere in Längsrichtung, verschieblich ist. Durch das Primärlager und das Sekundärlager kann eine besonders sichere Abstützung der Spindelanordnung, insbesondere der Primärspindel und/oder der Sekundärspindel, erreicht werden. Zweckmäßigerweise ist zumindest das Primärlager und/oder das Sekundärlager ein Wälzlager, insbesondere ein Kugellager, denn hierdurch können insbesondere die Reibungsverluste reduziert werden, so dass eine besonders energieeffiziente Lagerung der Spindelanordnung erreicht werden kann. Alternativ oder zusätzlich bevorzugt kann das Primärlager und/oder das Sekundärlager auch Gleitlager umfassen und/oder durch diese ausgebildet sein, wodurch eine besonders kostengünstige und wartungsarme Spindelanordnung resultiert. Das Primärlager ist dabei insbesondere an der Primärlagerstelle der Primärspindel angeordnet und das Sekundärlager an der Sekundärlagerstelle der Sekundärspindel. Daher dient das Primärlager insbesondere dazu, die Primärspindel zu lagern und das Sekundärlager dient insbesondere zur Lagerung der Sekundärspindel. Das Primärlager als auch das Sekundärlager können jeweils mehrere Lagereinheiten umfassen. Beispielsweise können daher mehrere, insbesondere in Längsrichtung, nebeneinander angeordnete Wälzlager und/oder Gleitlager das Primärlager oder das Sekundärlager ausbilden. Beispielsweise sollten diese axial nebeneinander angeordneten Lager zur Ausbildung des Primärlagers jeweils eine O-Lageranordnung sein oder miteinander ausbilden. Alternativ oder zusätzlich bevorzugt kann auch das Sekundärlager als eine O-Lageranordnung ausgebildet sein.

Insbesondere ist das Primärlager zum Sekundärlager, insbesondere in Längsrichtung, verschieblich angeordnet. Hierdurch kann in besonders einfacher Weise eine Verschieblichkeit der Primärspindel in Relation zur Sekundärspindel erreicht werden, wobei jedoch gleichzeitig ein hohes Maß an Abstützfähigkeit sichergestellt werden kann.

Vorteilhafterweise ist die Werkzeugmaschinenspindelanordnung derart ausgebildet, dass eine Anordnung und/oder eine Demontage eines oder des Werkzeugs nur möglich ist, wenn die Primärspindel in Längsrichtung in Relation zur Sekundärspindel verschoben ist. In anderen Worten kann die Werkzeugmaschinenspindelanordnung derart ausgebildet sein, dass ein Werkzeug - ausgehend von der Umgebung - nur dann in der Werkzeugaufnahme angeordnet werden kann, wenn die Primärspindel in Relation zur Sekundärspindel in der Wechselstellung befindlich ist. Das Werkzeug kann ringförmig ausgeführt und auf einer Werkzeugaufnahme reib- und/oder formschlüssig montiert sein. Es kann das Werkzeug aber auch komplett aus einem Teil bestehen, dass bedeutet beispielsweise das mögliche HSK Schnittstellen zur Primär- und Sekundärspindel am Werkzeug ausgebildet sind (z.B. ein Walzenfräser). Das maßgebliche Werkzeug ist insbesondere derart ausgebildet, dass dieses ringförmig ist und/oder eine Aufnahme aufweist, in welche die Primär- oder die Sekundärspindel in einem montierten Zustand eingeführt sein muss oder kann. In anderen Worten kann das maßgebliche Werkzeug für die Beurteilung der Montagemöglichkeit insbesondere eine Schleifscheibe oder ein Schleifring sein. Durch die Verhinderung einer Demontage des Werkzeugs auch in der Bearbeitungsstellung kann erreicht werden, dass ein versehentliches Demontieren des Werkzeugs unmöglich gemacht wird, so dass hierdurch die Betriebssicherheit der Werkzeugmaschinenspindelanordnung gesteigert werden kann.

Zweckmäßigerweise ist die Primärspindel in der Primärlagerstelle und/oder die Sekundärspindel in der Sekundärlagerstelle in Längsrichtung axial gelagert. Daher kann die Werkzeugmaschinenspindel beispielsweise derart ausgebildet sein, dass Axialkräfte, welche auf die Primärspindel wirken, in der Primärlagerstelle sicher aufgenommen werden können, um so eine kraftbedingte Axialverlagerung der Primärspindel zu verhindern. Alternativ oder zusätzlich bevorzugt kann auch die Sekundärspindel derart ausgebildet sein, dass in der Sekundärlagerstelle die Sekundärspindel in Längsrichtung axial gelagert ist oder lagerbar ist. Beispielsweise kann diese axiale Lagerfähigkeit dadurch erreicht werden, dass in der Primär- und in der Sekundärlagerstelle Axiallager, Rillenkugellager oder Schrägkugellager vorgesehen sind, welche Kräfte in Längsrichtung sicher aufnehmen können.

Um insbesondere eine Verschieblichkeit der Primärlagerstelle und/oder der Sekundärlagerstelle in Längsrichtung sicherzustellen bzw. zu erreichen, können das Primärlager und/oder das Sekundärlager - zumindest teilweise - in Lagerböcken angeordnet sein, welche wiederum in Längsrichtung verschieblich sind. Die Verschieblichkeit der Lagerböcke und/oder generell (unabhängig von den Lagerböcken) der Primärlagerstelle und/oder der Sekundärlagerstelle und/oder der Bauteile, welche die Primärlagerstelle oder die Sekundärlagerstelle tragen, kann z.B. durch eine Axialführung, insbesondere durch eine Schwalbenschwanzführung, Linearführung oder durch eine Rundführung, erreicht werden. Durch diese Verschieblichkeit der Lagerböcke, welche die Primärspindel und/oder die Sekundärspindel jeweils axial abstützen, kann erreicht werden, dass axiale Kräfte sicher aufgenommen werden können und gleichzeitig ein einfacher Werkzeugwechsel erfolgen kann. Die Verschiebung der Lagermöglichkeiten der Primärspindel und der Sekundärspindel wiederum kann beispielsweise durch Stellmittel erfolgen, wie sie bereits dargelegt wurden, um einen hohen Automatisierungsgrad zu erreichen.

Vorteilhafterweise sind das Primärlager und/oder das Sekundärlager in einem oder in Lagerböcken angeordnet, welche in Längsrichtung verschieblich sind bzw. sein können. Hierdurch kann eine einfache und schnelle Demontage des Werkzeugs erreicht werden, wobei zusätzlich Bauraum gespart werden kann. Das Primärlager und/oder das Sekundärlager können insbesondere jeweils in einem Lagerbock gelagert bzw. angeordnet sein.

Zweckmäßigerweise ist das Sekundärlager oder das sekundärlagertragende Bauteil oder -gruppe, insbesondere der Lagerbock, in einer Führung, insbesondere in der Axialführung, geführt, wobei diese Führung eine schwimmende Lagerung des Sekundärlagers und/oder des sekundärlagertragenden Bauteils ausbildet bzw. ausbilden kann, insbesondere in einer bevorzugten Ausgestaltung. Unter einer schwimmenden Lagerung ist insbesondere zu verstehen, dass die Führung es erlaubt, dass das gelagerte Element bzw. Bauteil, insbesondere das Sekundärlager, einen Spielraum hat bzw. aufweist, dass in der Führung das Gelagerte, insbesondere entlang der Führung, frei beweglich ist. Dieser Spielraum ist insbesondere derart beschaffen, dass das Spiel oder der Raum in der Führung senkrecht zu diesem Spielraum deutlich kleiner ist, insbesondere maximal 10% des Spielraums. Die schwimmende Lagerung weist daher, insbesondere in einer Position, in welcher die Werkzeugspindelanordnung ein Werkzeug aufgenommen hat bzw. in einer Bearbeitungsposition, keinen Endanschlag in die "Schwimmrichtung" bzw. in die Richtung mit Spielraum auf. Diese Richtung kann insbesondere parallel zu der Längsrichtung sein. Durch die Vorsehung einer schwimmenden Lagerung in der Führung, insbesondere in der Führung für das Sekundärlager, kann insbesondere erreicht werden, dass Fertigungstoleranzen ausgeglichen werden können und/oder dass Wärmedehnungen nicht zu erhöhenden Spindelbelastungen führen. Das Primärlager bzw. die Primärlagerstelle ist insbesondere derart ausgebildet bzw. angeordnet, dass diese nicht schwimmend ist bzw. ein Festlager oder eine Festlagerstelle sind bzw. ausbilden. Besonders bevorzugt kann das Primärlager auch vorgespannt sein, um so eine besonders hohe bzw. gute axiale Führungsgenauigkeit zu erreichen.

Vorteilhafterweise können das und/oder die Stellmittel, welche die Lagermöglichkeiten der Primärspindel und/oder der Sekundärspindel verschieben können, insbesondere die Primärlagerstelle und/oder der Sekundärlagerstelle und/oder der Bauteile, welche die Primärlagerstelle oder die Sekundärlagerstelle tragen, entkuppelbar sein. Unter einer Entkuppelbarkeit ist insbesondere zu verstehen, dass kein Kraftfluss mehr von dem Stellmittel auf das zu verschiebende Element bzw. Bauteil oder Baugruppe und umgekehrt möglich ist. Hierdurch kann insbesondere besonders einfach - trotz des Einsatzes eines Stellmittels - eine schwimmende Lagerstelle bereitgestellt werden.

Ein weiterer Aspekt der Erfindung kann eine Werkzeugmaschine, insbesondere eine Schleifmaschine, betreffen. Die Werkzeugmaschine umfasst insbesondere eine Werkzeugmaschinenspindelanordnung wie vorgehend und nachfolgend beschrieben. Zweckmäßigerweise verfügt die Werkzeugmaschine auch noch über ein Maschinenbett bzw. ein Maschinengestell, um die Werkzeugmaschinenspindelanordnung sicher gegenüber einem Boden abzustützen.

Ein weiterer Aspekt der Erfindung kann die Verwendung einer Werkzeugmaschinenspindelanordnung, wie vorgehend und nachfolgend beschrieben, und/oder eine Werkzeugmaschine, wie vorhergehend und nachfolgend beschrieben, zur Fertigung von Bauteilen einer Kleinserie betreffen. Eine Kleinserie umfasst dabei insbesondere eine Serie von Bauteilen im Bereich der Stückzahlen von 1 bis 25, bevorzugt im Bereich von 5 bis 15. Durch die Verwendung der vorgehend und nachfolgend beschriebenen Werkzeugmaschinen bzw. Werkzeugmaschinenspindelanordnung in der Fertigung von Bauteilen einer Kleinserie kann eine besonders wirtschaftliche Fertigung der Teile der Kleinserie erfolgen. Darüber hinaus kann durch die erfindungsgemäße Ausgestaltung auch ein schneller Wechsel von Schleifscheiben, z.B. der Schrubb- und der Schlichtscheibe, erfolgen, was gerade bei Kleinserien besonders vorteilhaft ist.

Weitere Merkmale und Eigenschaften der vorliegenden Erfindung ergeben sich aus der nachfolgenden Beschreibung von bevorzugten Ausführungsformen mit Bezug auf die beigefügten Figuren. Es zeigen:
- Figur 1: eine Werkzeugmaschinenspindelanordnung in einer ersten Variante der Wechselstellung;
- Figur 2: eine Werkzeugmaschinenspindelanordnung in einer zweiten Variante der Wechselstellung; und
- Figur 3: eine Werkzeugmaschinenspindelanordnung in der Bearbeitungsstellung.

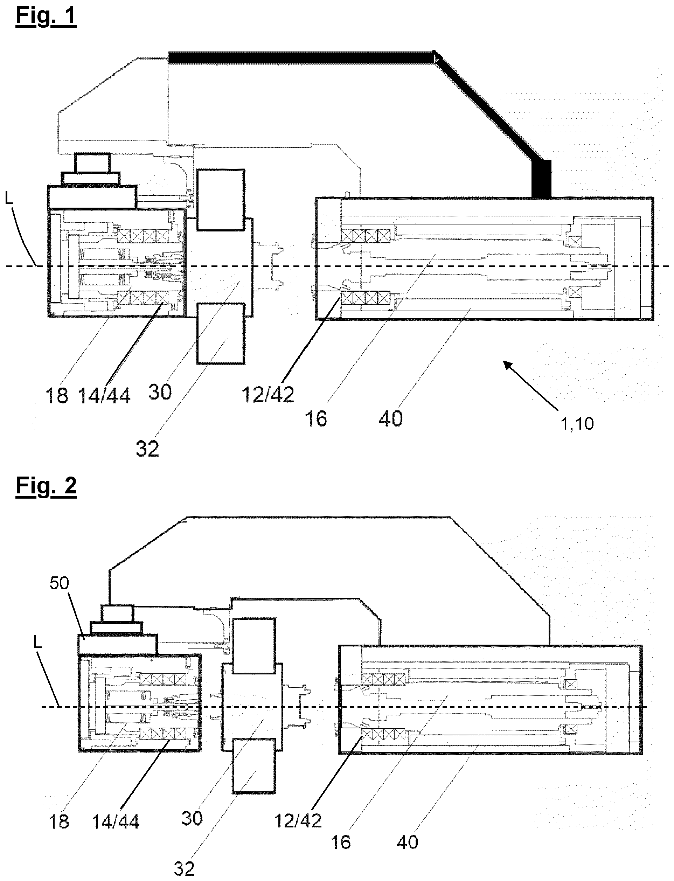

In der **Figur 1** ist eine Werkzeugmaschinenspindelanordnung 1 in einer Werkzeugmaschine gezeigt, wobei sich die Werkzeugmaschinenspindelanordnung 1 sich in der Wechselstellung befindet. Die Werkzeugmaschine ist dabei eine Schleifmaschine. Das Werkzeug 32 in der Werkzeugaufnahme 30 ist eine Schleifscheibe bzw. ein Schleifring. Die Werkzeugmaschinenspindelanordnung 1 verfügt über eine Spindelanordnung 10 sowie eine Werkzeugaufnahme 30. Die Werkzeugaufnahme 30 ist in Längsrichtung L zwischen der Primärspindel 16 und der Sekundärspindel 18 der Spindelanordnung 10 angeordnet, wobei die Werkzeugaufnahme 30 in der Lage ist, Kräfte und/oder Momente in und um die Längsrichtung L zwischen der Primärspindel 16 und der Sekundärspindel 18 zu übertragen. Die Werkzeugaufnahme 30 und die Primärspindel 16 als auch die Werkzeugaufnahme 30 und die Sekundärspindel 18 sind jeweils über HSK-Kupplungen miteinander verbindbar, wobei die HSK-Kupplung zwischen der Werkzeugaufnahme 30 und der Sekundärspindel 18 eingekuppelt ist und die andere HSK-Kupplung ausgekuppelt ist. Die Primärspindel 16 ist dabei durch die Primärlagerstelle 12 gelagert und die Sekundärspindel 18 durch die Sekundärlagerstelle 14, wobei die Primärlagerstelle 12 und die Sekundärlagerstelle 14 jeweils mehrreihige Wälzlager aufweisen. Die Primärspindel 16 ist dabei um die Längsrichtung L drehbar gelagert und durch den Motor 40 antreibbar, wobei die Primärspindel 16 zumindest teilweise die Motorwelle des Motors 40 ausbildet.

In der **Figur 2** ist eine der Figur 1 sehr ähnliche Werkzeugmaschinenspindelanordung 1 gezeigt, welche sich ebenfalls in der Wechselstellung befindet. Um eine axiale Verschieblichkeit der Sekundärspindel 18 in Relation zur Primärspindel 16 in Längsrichtung L zu erreichen, verfügt die Werkzeugmaschinenspindelanordnung 1 über ein Stellmittel 50, welches die Sekundärspindel 18 in Relation zur Primärspindel 16 in Längsrichtung L verschieben kann und/oder welches zum Ausrücken der Werkzeugaufnahme 30 verwendet werden kann.

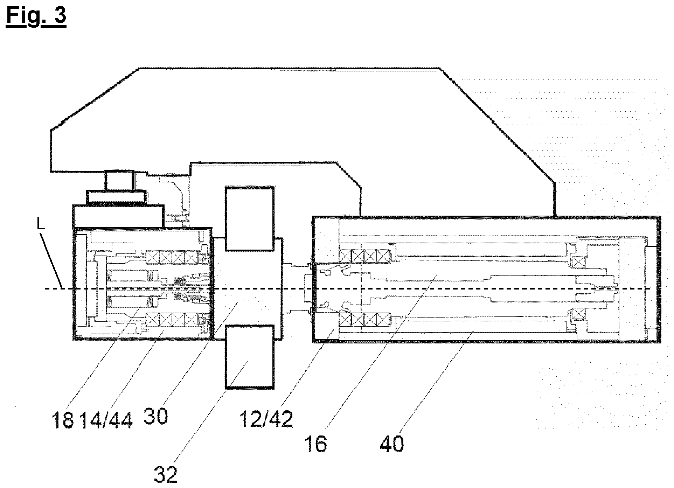

In der **Figur 3** ist eine weitere Werkzeugmaschinenspindelanordnung 1 gezeigt. In der Figur 3 befindet sich die Werkzeugmaschinenspindelanordnung 1 jedoch in der Bearbeitungsstellung, so dass in der in Figur 3 dargestellten Positionierung die Primärspindel 16 und die Sekundärspindel 18 das Werkzeug 32 sicher in der Werkzeugaufnahme 30 halten und wobei über die Werkzeugaufnahme 30 ein Drehmoment um die Längsrichtung L zwischen der Primärspindel 16 und der Sekundärspindel 18 übertragbar ist. Die Primärspindel 16 ist über den Motor 40 angetrieben oder antreibbar, wobei der Motor 40 teilweise die Primärspindel 16 umgibt.

### Bezugszeichenliste

- 1 -: Werkzeugmaschinenspindelanordnung
- 10 -: Spindelanordnung
- 12 -: Primärlagerstelle
- 14 -: Sekundärlagerstelle
- 16 -: Primärspindel
- 18 -: Sekundärspindel
- 30 -: Werkzeugaufnahme
- 32 -: Werkzeug
- 40 -: Motor
- 42 -: Primärlager
- 44 -: Sekundärlager
- L -: Längsrichtung

## Patentansprüche

1. Werkzeugmaschinenspindelanordnung (1), umfassend
eine Spindelanordnung (10) und eine Werkzeugaufnahme (30),
wobei die Spindelanordnung (10) eine Primärspindel (16) mit einer Primärlagerstelle (12) und eine Sekundärspindel (18) mit einer Sekundärlagerstelle (14) umfasst,
wobei die Spindelanordnung (10) durch die Primärlagerstelle (12) und durch die Sekundärlagerstelle (14) drehbar um eine Längsrichtung (L) gelagert ist oder lagerbar ist,
wobei die Werkzeugaufnahme (30) in Längsrichtung (L) zwischen der Primärlagerstelle (12) und der Sekundärlagerstelle (14) angeordnet ist, und wobei die Primärspindel (16) und die Sekundärspindel (18) in Längsrichtung (L) verschieblich zueinander sind.

2. Werkzeugmaschinenspindelanordnung (1) gemäß Anspruch 1,
wobei die Primärspindel (16) und die Sekundärspindel (18) derart ausgelegt sind, dass formschlüssig und/oder reibschlüssig ein Drehmoment um die Längsrichtung (L) zwischen der Primärspindel (16) und der Sekundärspindel (18) übertragbar ist.

3. Werkzeugmaschinenspindelanordnung (1) gemäß einem der vorhergehenden Ansprüche,
wobei die Primärspindel (16) und die Sekundärspindel (18) derart ausgelegt sind, dass formschlüssig und/oder reibschlüssig ein Drehmoment senkrecht um die Längsrichtung (L) und/oder Kräfte in Längsrichtung (L) und/oder senkrecht zur Längsrichtung (L) zwischen der Primärspindel (16) und der Sekundärspindel (18) übertragbar sind.

4. Werkzeugmaschinenspindelanordnung (1) gemäß einem der vorhergehenden Ansprüche,
umfassend einen Motor (40), insbesondere einen Elektromotor,
wobei der Motor (40) ein Drehmoment um die Längsrichtung (L) auf die Primärspindel (16) und/oder auf die Sekundärspindel (18) ausübt oder ausüben kann.

5. Werkzeugmaschinenspindelanordnung (1) gemäß einem der vorhergehenden Ansprüche,
wobei an der Werkzeugaufnahme (30) ein Werkzeug (32), insbesondere ein Werkzeug mit geometrisch unbestimmter Schneide, angeordnet ist.

6. Werkzeugmaschinenspindelanordnung (1) gemäß einem der vorhergehenden Ansprüche,
wobei die Werkzeugaufnahme (30) eine kraftschlüssige Werkzeugaufnahme (30) ist.

7. Werkzeugmaschinenspindelanordnung (1) gemäß einem der vorhergehenden Ansprüche,
umfassend ein Primärlager (42) und ein Sekundärlager (44),
wobei insbesondere das Primärlager (42) und/oder das Sekundärlager (44) ein Wälzlager ist und/oder umfasst,
wobei das Primärlager (42) an der Primärlagerstelle (12) angeordnet ist, wobei das Sekundärlager (44) an der Sekundärlagerstelle (14) angeordnet ist,
wobei das Sekundärlager (44) zum Primärlager (42) vorteilhafterweise verschieblich, insbesondere in Längsrichtung (L), ist.

8. Werkzeugmaschinenspindelanordnung (1) gemäß einem der vorhergehenden Ansprüche,
wobei die Werkzeugmaschinenspindelanordnung (1) derart ausgebildet ist, dass eine Anordnung und/oder eine Demontage eines oder des Werkzeugs (32) nur möglich ist,
wenn die Primärspindel (16) in Längsrichtung (L) in Relation zur Sekundärspindel (18) verschoben ist.

9. Werkzeugmaschinenspindelanordnung (1) gemäß einem der vorhergehenden Ansprüche,
wobei die Primärspindel (16) in der Primärlagerstelle (12) und/oder die Sekundärspindel (18) in der Sekundärlagerstelle (14) in Längsrichtung (L) axial gelagert sind.

10. Werkzeugmaschinenspindelanordnung (1) gemäß einem der vorhergehenden Ansprüche,
wobei das Primärlager (42) und/oder das Sekundärlager (44) in einem oder in Lagerböcken angeordnet sind, welche in Längsrichtung (L) verschieblich sind.

11. Werkzeugmaschinenspindelanordnung (1) gemäß einem der vorhergehenden Ansprüche,
wobei das Primärlager (42) und/oder das Sekundärlager (44) durch eine Axialführung, insbesondere durch eine Schwalbenschwanzführung, Linearführung oder durch eine Rundführung, geführt sind.

12. Werkzeugmaschinenspindelanordnung (1) gemäß einem der vorhergehenden Ansprüche,
wobei das Sekundärlager (44) oder das sekundärlagertragende Bauteil, insbesondere der Lagerbock, in einer Führung, insbesondere in der Axialführung, geführt ist,
wobei diese Führung eine schwimmende Lagerung des Sekundärlagers (44) ausbildet.

13. Werkzeugmaschinenspindelanordnung (1) gemäß Anspruch 10,
wobei die schwimmende Lagerung in Längsrichtung (L) schwimmend ist.

14. Werkzeugmaschine, insbesondere Schleifmaschine, umfassend eine Werkzeugmaschinenspindelanordnung (1) gemäß einem der vorhergehenden Ansprüche.

15. Verwendung einer Werkzeugmaschinenspindelanordnung (1) gemäß einem der Ansprüche 1 bis 13 und/oder eine Werkzeugmaschine gemäß Anspruch 14 zur Fertigung von Bauteilen einer Kleinserie.
